(19) **Europäisches Patentamt**

**European Patent Office**

**Office européen des brevets**

(11) **EP 0 934 861 A2**

(12) **EUROPÄISCHE PATENTANMELDUNG**

(43) Veröffentlichungstag:
**11.08.1999 Patentblatt 1999/32**

(51) Int. Cl.$^6$: **B60T 13/66**

(21) Anmeldenummer: **99101547.0**

(22) Anmeldetag: **29.01.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **05.02.1998 DE 19804570**

(71) Anmelder:
**KNORR-BREMSE**
**Systeme für Schienenfahrzeuge GmbH**
**80809 München (DE)**

(72) Erfinder:
• **Dorn, Wolfgang**
  **80997 München (DE)**
• **Mayer, Alfons**
  **80997 München (DE)**

(54) **Bremssteuerung für Fahrzeuge, insbesondere für Schienenfahrzeuge und Verfahren zum Steuern von Fahrzeugbremsen**

(57)  Die Erfindung betrifft eine Steuerung mit Regeleingriff, bei der ein vorgegebenes Soll-Verzögerungssignal (BAR) mit einem Verzögerungssignal ($b_i$) verglichen wird und in Abhängigkeit davon ein Korrektursignal (K) erzeugt wird, das mit dem Soll-Verzögerungssignal (BAR) zu einem Ausgangssignal (S) verarbeitet wird. Das Korrektursignal (K) wird über einen oder mehrere Zeittakte konstant gehalten wird, wenn der Wert des Momentanverzögerungssignals (b) innerhalb eines vorgegebenen Wertebereichs bzw. Toleranzbandes liegt. Hingegen wird das Korrektursignal (K) von einem Zeittakt zum nächsten verändert, wenn die Momentanverzögerung (b) außerhalb dieses Toleranzbandes liegt (Fig. 1).

Fig. 1

EP 0 934 861 A2

**Beschreibung**

Die Erfindung bezieht sich auf eine Bremssteuerung gemäß dem Oberbegriff des Patentanspruches 1 und auf ein Verfahren gemäß dem Oberbegriff des Patentanspruches 11.

Beim Abbremsen von Fahrzeugen bzw. Fahrzeugzügen gibt der Fahrer über ein Bremspedal oder einen Bremshebel üblicherweise einen gewünschten Wert einer Bremskraft bzw. einer gewünschten Fahrzeugverzögerung (sogenannte Bremsanforderung) vor. Die tatsächliche Fahrzeugverzögerung aufgrund dieser Bremsanforderung hängt jedoch von einer Vielzahl von Parametern ab, die dem Fahrer nicht bekannt sind, wie z.B. Zustand der Bremsanlage, Beladung des Fahrzeuges, Neigung der Fahrbahn (Gefälle), Haftwert zwischen Fahrbahn und Rädern, etc. Es wurde daher beispielsweise bei Straßenbahnen bereits versucht, die Bremsanlage zu Regeln, wobei die Bremsanforderung der Sollwert und die gemessene tatsächliche Fahrzeugverzögerung der Istwert der Regelung war. Dabei traten allerdings zahlreiche Schwierigkeiten auf. Ein Hauptproblem besteht darin, daß bei der Betätigung von Stellgliedern von Schienenfahrzeugbremsanlagen relativ große Totzeiten auftreten, die bei Straßenbahnen typischerweise im Bereich von 0,7 Sekunden liegen; ferner wird zum Bremskraftaufbau eine relativ lange Zeitspanne (Schwellzeit) benötigt, die typischerweise im Bereich von 1 Sekunde liegt.

Aufgrund der Trägheit derartiger Bremsanlagen und aufgrund diverser Eigenfrequenzen von Fahrgestellen und anderen Fahrzeugkomponenten kann es bei geregelten Bremsvorgängen zu starkem Rucken innerhalb des Zugverbandes kommen, was äußerst unerwünscht ist. Somit ist infolge der genannten Schwierigkeiten eine stabile Regelung mit Rückkopplung im klassischen Sinne, d.h. mit einer kontinuierlichen Signalrückführung, kaum möglich.

Eine weitere, einer klassischen Regelung entgegenstehende Schwierigkeit besteht darin, daß bei einer Istwertbestimmung der Fahrzeugverzögerung durch Differenzieren von Raddrehzahlsignalen, die z. B. von induktiven Radsensoren geliefert werden, relativ große prozentuale Fehler auftreten können, die auf Abtasttaktzeiten zurückzuführen sind, die bei Straßenbahnen typischerweise im Bereich von 100 Millisekunden liegen. Diese Fehler erschweren die regelungstechnische Beherrschbarkeit zusätzlich.

Aufgabe der Erfindung ist es daher, eine Bremssteuerung und ein Verfahren zu schaffen, mit der bzw. mit dem eine stabile Abbremsung gemäß der von Fahrer vorgegebenen Bremsanforderung bei beliebigen die Abbremsung beeinflussenden Parametern realisierbar ist.

Diese Aufgabe wird durch die in den Patentansprüchen 1 und 11 angegebenen Merkmale gelöst. Vorteilhafte Ausgestaltungen und Weiterbildungen der Erfindung sind den Unteransprüchen zu entnehmen.

Das Grundprinzip der Erfindung besteht darin, der Steuerung eine Regelung nachzuordnen, die mit einem Korrektursignal nur denn eingreift, wenn die Abweichung zwischen der Bremsanforderung (als Soll-Verzögerungssignal) und der tatsächlichen Verzögerung des Fahrzeuges außerhalb eines vorgegebenen Bereiches liegt. Das korrigierte Bremsanforderungssignal ist dann für die weitere Steuerung konstant, solange die genannte Abweichung innerhalb des vorgegebenen Bereiches liegt. Eine Veränderung des Korrektursignals wird erst dann wirksam, wenn die genannte Abweichung außerhalb des vorgegebenen Bereiches liegt.

Das Korrektursignal wird solange über einen oder mehrere Zeittakte konstant gehalten, als die Differenz zwischen dem "Momentanverzögerungsignal" und dem Soll-Verzögerungssignal innerhalb eines vorgegebenen Wertebereichs liegt. Hingegen wird das Korrektursignal von einem Zeittakt zum nächsten verändert, wenn die Momentanverzögerung außerhalb dieses "Toleranzbandes" liegt.

Im Vergleich zu einer klassischen Analogregelung oder einer herkömmlichen Digitalregelung, bei denen während des gesamten Regelungsvorganges eine Stellgröße kontinuierlich rückgeführt und verarbeitet wird, wird bei der erfindungsgemäßen Signalverarbeitung die als Stellgröße auffassbare Momentanverzögerung nur dann verarbeitet, d. h. zur Erzeugung des Korrektursignals verwendet, wenn die als "Regelabweichung" auffassbare Differenz zwischen dem Soll-Verzögerungssignal und der Momentanverzögerung betragsmäßig zu groß wird, d. h. außerhalb des Toleranzbandes liegt. Ist hingegen die Regelabweichung so klein, daß die Differenz innerhalb des Toleranzbandes liegt, so wird die Momentanverzögerung nicht verarbeitet und das Korrektursignal wird unverändert beibehalten.

Da der "Regeleingriff" somit nur bei größeren Abweichungen erfolgt, ansonsten eine ungeregelte Steuerung erfolgt, lassen sich die eingangs erwähnten Totzeiten und Schwellzeiten besser beherrschen.

Ferner können bestehende Bremsanlagen mit einer erfindungsgemäßen Bremssteuerung nachgerüstet werden, ohne daß mechanische Komponenten der bestehenden Bremsanlage verändert werden müssen.

Die Erfindung ist sowohl als Hardware-Lösung in Form einer elektronischen Schaltung als auch als Softwarelösung in Form eines Computerprogrammes für einen programmgesteuerten Prozessor oder als eine Kombination aus beiden Lösungen realisierbar. Insbesondere eine softwaremäßige Realisierung erlaubt eine sehr kostengünstige Anpassung der bestehenden Bremssteuerung an ein bestimmtes Fahrzeug und bestimmte Einsatzbedingungen.

Nach einer Weiterbildung der Erfindung wird ein gemessener bzw. aus Geschwindigkeitssignalen berechneter "Verlauf" zeitdiskreter Momentanverzögerungssignale geglättet. Dies erfolgt dadurch, daß aus einem aktuellen Meßwert, der die momentane Verzögerung des Fahrzeuges repräsentiert und aus Meßwerten vorangegangener Zeittakte ein geglättetes Momentanverzögerungssignal gebildet wird. Die Glättung erfolgt durch eine spezielle Filterung die darin besteht, daß eine Anzahl zeitlich nacheinander genommener Meßwerte unterschiedlich gewichtet werden und aus diesen gewichteten Meßwerten ein gewichteter Mittelwert gebildet wird. Die Gewichtung ist dabei so festgelegt, daß die dem aktuellen Meßzeitpunkt zeitlich nahen Meßwerte höher gewichtet werden als die zeitlich weiter entfernten Meßwerte. Im Gegensatz zu einer Frequenzfilterung, beispielsweise mit einem Tiefpaßfilter, erhält man hierdurch keine Signaltransformationen im Zeitbereich. Durch eine derartige Glättung des Verzögerungssignalverlaufs lassen sich Fehler verringern, die bei der Messung bzw. bei der Berechnung der einzelnen zeitdiskreten Momentanverzögerungen gemacht werden. Dies ergibt einen insgesamt glatteren Verlauf des Korrektursignals und dementsprechend sind ruckärmere Bremsungen möglich.

Nach einer Weiterbildung der Erfindung wird ein durch zwei zeitlich aufeinanderfolgende Korrektursignale gebildeter "Korrektursignalgradient" bei Über- bzw. Unterschreiten eines vorgegebenen positiven bzw. negativen Maximalgradienten auf diesen beschränkt. Dies hat den Vorteil, daß Verzögerungsstöße und hieraus resultierende Kraftstöße am Fahrzeug oder innerhalb eines Fahrzeugverbundes während des Bremsvorganges weiter minimiert werden. Somit verringert sich die mechanische Belastung des Fahrzeuges, wobei sich gleichzeitig der Fahrkomfort für die Passagiere erhöht.

Im folgenden wird die Erfindung anhand eines Ausführungsbeispiels im Zusammenhang mit der Zeichnung näher erläutert:

Es zeigt:

Fig. 1     Ein Blockschaltbild einer Bremssteuerung nach der Erfindung und

Fig. 2     ein schematisches Blockschaltbild einer Bremsanlage eines Fahrzeuges, die mit einer erfindungsgemäßen Bremssteuerung ausgestattet ist.

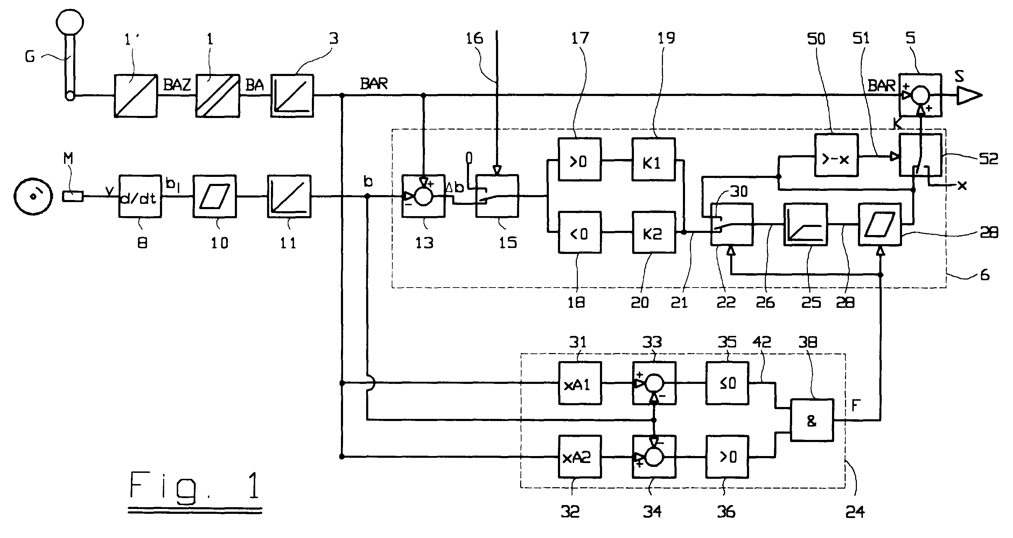

In Fig. 1 erzeugt ein Geber G, der zum Beispiel ein Bremshebel sein kann, ein mechanisches Signal, das durch einen mechanisch-elektrischen Wandler 1' in ein analoges elektrisches Bremsanforderungssignal BAZ für die Zugeinheit umgewandelt wird und das eine vom Fahrer angeforderte Soll-Verzögerung des zu bremsenden Fahrzeuges repräsentiert. Dieses Bremsanforderungssignal BAZ wird über einen Signalwandler 1 mit integriertem A/D-Wandler als digitales Signal BA einem Ruckbegrenzungsschaltkreis 3 zugeführt, der den Ahstiegs- und Abfallgradienten des Signales BA begrenzt und ein "gefiltertes" Bremsanforderungssignal BAR ausgibt. Ändert sich das vom Fahrer vorgegebene Signal BAZ zum Beispiel bei schlagartigem Einleiten einer Vollbremsung oder schlagartigem Lösen der Bremse, so bewirkt der Ruckbegrenzungsschaltkreis 3, daß sich sein Ausgangssignal BAR innerhalb eines vorgegebenen Zeitintervalles, beispielsweise eines Zeittaktes, nur um einen vorgegebenen Wert gegenüber dem vorherigen Zeittakt ändern kann. Dieses gefilterte Bremsanforderungssignal BAR ist das "normale" Ausgangssignal der Steuerung, das Betätigungsorganen der Bremse zugeführt wird. Bei der Erfindung wird dieses Signal bei Eintritt bestimmter Betriebszustände modifiziert. Hierzu ist ein Summierer 5 vorgesehen, dessen einem Eingang das Signal BAR und dessem anderen Eingang ein Korrektursignal K zugeführt wird. Der Ausgang des Summierers 5 liefert dann das den Betätigungsorganen der Bremse zugeführte Steuersignal S.

Das Korrektursignal K wird in einem untergeordneten Regelkreis erzeugt. Hierzu ermittelt ein Meßfühler M durch Messung der Drehzahl eines oderer mehrerer Räder des Fahrzeuges ein die Momentangeschwindigkeit des Fahrzeuges repräsentierendes Signal v, das in einem Differenzierer 8 zeitlich differenziert wird, womit man ein die Fahrzeugbeschleunigung bzw. -verzögerung repräsentierendes Signal $b_i$ erhält. Dieses - im folgenden Verzögerungssignal bezeichnete - Signal wird in einem Speicherelement 10 zwischengespeichert, wobei das Speicherelement 10 mehrere aufeinanderfolgende Meßwerte speichern kann, beispielsweise vier oder fünf aufeinanderfolgende Verzögerungssignale.

Das zum aktuellen Zeitpunkt gemessene Verzögerungssignal und mehrere bei vorausgegangenen Messungen ermittelte und im Speicherelement gespeicherte Verzögerungssignale vorheriger Zeittakte werden einem Filterelement 11 zugeführt und von diesem "gefiltert".

Das Filterelement 11 ist ein digitales numerisches Filter, das allgemein gesprochen nur eine Amplitudennormierung aufeinanderfolgender Verzögerungssignale durchführt, jedoch keine Freguenzfilterung vornimmt und somit das Zeitverhalten des durch die Verzögerungssignale gebildeten Signalverlaufs glättet. Das Grundprinzip dieses Filters besteht darin, daß der aktuelle Verzögerungswert mit einem relativ hohen Gewichtungsfaktor multipliziert wird, während die Verzögerungswerte der zeitlich vorangegangenen Messungen mit kleineren Gewichtungsfaktoren multipliziert werden. Die einzelnen multiplizierten Werte werden addiert und durch die Summe der einzelnen Gewichtungsfaktoren dividiert. Dieser Zusammenhang drückt sich in der folgenden Berechnungsformel aus:

$$F_j = \frac{G_0 \; b_0 \; + \; G_{-1} \; b_{-1} + \; .... \; + \; G_{-n} \; b_{-n}}{b_0 \; + \; b_{-1} \; + \; .... \; + \; b_{-n}} \; =$$

$$F_j = \frac{\sum\limits_{i=-n}^{0} G_i \; b_i}{\sum\limits_{i=-n}^{0} b_i} \; ; \; i, \; j, \; n \in N$$

Hierbei ist $F_j$ ein durch das Filterelement 11 geglättetes Verzögerungssignal zum Zeitpunkt j, das dem geglätteten Signal b der Fig. 1 entspricht. $F_j$ wird aus einzelnen Verzögerungswerten $b_i$ berechnet, wobei $b_o$ dem Wert des Momentanverzögerungssignals des aktuell betrachteten Zeittaktes entspricht $b_{-1}$ dem des vorangegangenen Zeittaktes, usw. Die Faktoren $G_i$ sind Gewichtungsfaktoren, die entsprechend den Verzögerungswerten $b_i$ indiziert sind, wobei hier gilt, $G_i > G_{i-1}$. Somit hat die "Vergangenheit" ein geringeres Gewicht als die "Gegenwart", bewirkt aber trotzdem eine Glättung, so daß unerwünschte Spitzen im Verzögerungssignal b vermieden werden.

Zur Verdeutlichung ist im folgenden eine konkrete Berechnungsformel angegeben, bei der außer dem Momentanverzögerungssignal $b_o$ vier diesem vorausgegangene Werte berücksichtigt werden und entsprechend ihrer zeitlichen Aufeinanderfolge mit Gewichtungsfaktoren von 1 bis 5 gewichtet werden.

$$F = \frac{5\,b_{-0} + 4\,b_{-1} + 3\,b_{-2} + 2\,b_{-3} + 1\,b_{-4}}{5 + 4 + 3 + 2 + 1}$$

Bei Verwendung von Filterfunktionen, bei denen die Argumente $b_{-i}$ linear auftreten ist es möglich, den Differenzierer 8 nach dem Filterelement anzuordnen, d. h. zuerst Geschwindigkeitssignale v zu filtern und anschließend zu differenzieren.

Das geglättete Verzögerungssignal b wird einem Subtrahierer 13 zugeführt und dort von dem gefilterten Bremsanforderungssignal BAR subtrahiert. Das so erzeugte Differenzsignal $\Delta b$ wird über einen Schalter 15 zwei Komparatoren 17 und 18 zugeführt. Der Schalter 15 dient dazu, bei bestimmten Betriebszuständen den nachgeordneten Regelkreis abzuschalten, beispielsweise bei Unterschreiten einer vorgegebenen Mindestgeschwindigkeit des Fahrzeuges, bei bestimmten Blockierzuständen, beispielsweise wenn alle Räder des Fahrzeuges zum Blockieren neigen, wenn die Haltebremse des Fahrzeuges angelegt ist, etc. Im Normalzustand ist der Schalter 15 in der dargestellten EIN-Stellung.

Den Komparatoren 17 und 18 sind jeweils Multiplizierer 19 und 20 nachgeschaltet, wobei die Anordnung der Komparatoren 17 und 18 und der Multiplizierer 19 und 20 den Zweck hat, für positive und negative Regelabweichungssignale $\Delta b$ unterschiedliche Regelverstärkungen vorzusehen. Der Komparator 17 läßt demnach nur ein Signal $\Delta b$ durch, das $> 0$ ist, während der Komparator 18 nur ein Signal $\Delta b$ durchläßt, das $< 0$ ist. In den Multiplizierern 19 und 20 werden die entsprechenden Signale dann mit unterschiedlichen Faktoren K1 und K2 multipliziert. Ist das Signal $\Delta b$ exakt 0, so sind beide Komparatoren 17 und 18 gesperrt, ein "Regeleingriff" ist nicht erforderlich. Die Ausgangssignale der Multiplizierer 19 und 20 werden einem gemeinsamen Anschluß eines Schalters 22 zugeführt, der durch ein logisches Signal F eines Fensterkomparators 24 gesteuert wird.

Dem Fensterkomparator 24 werden das gefilterte Bremsanforderungssignal BAR und das geglättete Verzögerungssignal b zugeführt. Das Bremsanforderungssignal BAR wird in einem ersten Multiplizierer 31 mit einem Faktor A1 und in einem zweiten Multiplizierer 32 mit einem Faktor A2 multipliziert. Die Ausgangssignale der Multiplizierer 31 und 32 werden in Vergleichern 33 und 34 mit dem Verzögerungssignal b verglichen. Den Vergleichern 33 und 34 sind Schwellwertkomparatoren 35 und 36 nachgeschaltet, in denen überprüft wird, ob das Ausgangssignal des Vergleichers 33 kleiner oder gleich 0 bzw. ob das Ausgangssignal des Vergleichers 34 größer 0 ist. Die Ausgangssignale der beiden Komparatoren 35 und 36 werden in einem UND-Gatter 38 miteinander verknüpft, das das Signal F ausgibt.

Durch den Fensterkomparator 24 wird im Ergebnis ein Wertebereich von (BAR * A1 - b) und (BAR * A2 - b) definiert und überprüft, ob das geglättete Verzögerungssignal b innerhalb dieses Wertebereiches bzw. Fensters liegt. Breite und Lage dieses Fensters bezüglich des geglätteten Verzögerungswertes b werden durch die Faktoren A1 und A2 bestimmt. Liegt das geglättete Verzögerungssignal b innerhalb des so definierten Fensters, so ist keine Korrektur des Bremsanforderungssignals BAR erforderlich. Liegt das Signal b dagegen außerhalb dieses Fensters, so ist der Schalter 22 in der in Fig. 1 dargestellten Stellung und das gegebenenfalls mit den Faktoren K1 bzw. K2 modifizierte Differenzsignal Δb wird über einen Gradientenbegrenzungsschaltkreis 25 einem Speicher 28 zugeführt, dessen Steuereingang ebenfalls das Signal F von dem Fensterkomparator 24 zugeführt wird. Der Speicher 28 speichert dann das gradientenbegrenzte und mit den Faktoren K1 oder K2 multiplizierte Differenzsignal Δb, das als Korrektursignal K über einen Schalter 52 einem Eingang des Summierers 5 zugeführt wird. Der Gradientenbegrenzungsschaltkreis 25 arbeitet in gleicher Weise wie der Ruckbegrenzungsschaltkreis 3 und läßt innerhalb eines vorgegebenen Zeitraumes von beispielsweise zwei aufeinanderfolgenden Zeittakten nur eine maximale Änderung um einen vorgegebenen Wert zu.

Das Ausgangssignal K des Speichers 28 wird in einem Komparator 50 mit einem fest vorgegebenen negativen Wert -x verglichen. Das Ausgangssignal des Komparators 50 steuert den Schalter 52. Sinn dieser Maßnahme ist es, negative Korrekturwerte nur bis zu einem fest vorgegebenen Wert -x zuzulassen. Das vom Fahrer eingesteuerte Bremsanforderungssignal BAR kann damit nur um diesen Wert -x verringert werden. Dadurch wird beispielsweise ein vollständiges Lösen der Bremse bei einer Bremsung bergauf verhindert. Ist das Ausgangssignal K des Speichers 28 negativ und mathematisch kleiner als der Wert -x, so wird der Schalter 52 umgeschaltet und dem entsprechenden Eingang des Summierers 5 wird ein Festwert -x zugeführt. Der Wert -x kann auch zu Null gewählt werden, wenn keine die Bremsanforderung BAR reduzierende Korrekturen sondern nur die Bremsanforderung BAR vergrößernde Korrekturen zugelassen werden sollen.

Zeigt das Ausgangssignal F des Fensterkomparators 24 an, daß das geglättete Verzögerungssignal b innerhalb des Fensters liegt, so wird der Schalter 22 umgeschaltet, und der zuletzt im Speicher 28 gespeicherte Korrekturwert K beibehalten. Hierzu ist im Schaltbild der Fig. 1 der Ausgang des Speichers 28 mit dem anderen Eingang 30 des Schalters 22 verbunden, so daß der Ausgangswert des Speichers 28 über den Schalter 22 und den Gradientenbegrenzungsschaltkreis 25 dem Eingang des Speichers 28 zugeführt wird.

Hierdurch wird erreicht, daß ein einmal während eines "Verlassen" des durch den Fensterkomparator 24 definierten Wertebereiches festgelegter Korrekturwert solange beibehalten wird, bis die geglättete Fahrzeugverzögerung b wieder den vorgegebenen Wertebereich verläßt.

Zu dem Wertebereich des Fensterkomparators sei noch folgendes erläutert:

Hat beispielsweise die Konstante A1 den Wert 1,0 und die Konstante A2 den Wert 1,1 so hat das vom Fensterkomparator ausgegebene logische Signal F genau dann den logischen Wert "1", wenn der Wert des Verzögerungssignals b in einem Bereich zwischen dem 1,0-fachen des Werts des Bremsanforderungssignals BAR und dem 1,1-fachen des Signals BAR liegt. Liegt das geglättete Verzögerungssignal b außerhalb dieses durch die beiden Konstanten A1 und A2 in Abhängigkeit des Werts des Signals BAR festgelegten "Toleranzbereiches", so hat das vom Fensterkomparator 24 ausgegebene Signal F den logischen Wert "0", was der gezeigten Stellung des Schalters 22 entspricht.

Bei der in Fig. 1 gezeigten Steuerung mit Regeleingriff können vier verschiedene Fälle auftreten, die im folgenden erläutert werden, wobei die Konstanten A1 und A2 beispielsweise die Werte "1,0" bzw. "1,1" haben. Ferner beziehe sich die Beschreibung der vier Fälle auf die in Fig. 1 gezeigte Stellung des Schalters 52 (der Wert des Signals 29 sei größer als der negative Wert "-x").

In einem ersten Fall sei das aus dem Geschwindigkeitssignal v gebildete geglättete Verzögerungssignal b gleich dem 0,95-fachen des gefilterten Bremsanforderungssignals BAR, d.h. die tatsächliche Verzögerung ist kleiner als die vom Fahrer angeforderte Verzögerung, wobei das Signal b außerhalb des Toleranzbandes liegt. In diesem Fall hat das Signal F einen logischen Wert "0", so daß der Schalter 22 in der gezeigten Stellung ist und das Speicherelement 28 in einen speicherbereiten Zustand geschalten wird. Da die tatsächliche Verzögerung des Fahrzeugs kleiner als die vom Fahrer angeforderte Verzögerung ist, ist das Differenzsignal Δb positiv und wird daher im Multiplizierer 19 mit dem Faktor K1 multipliziert und als Signal 21 wird über den Schalter 22 an den Gradientenbegrenzungsschaltkreis 25 ausgegeben.

Das Signal 26 erhöht seinen Wert mit dem Gradient, der durch den Gradientenbegrenzungsschaltkreis 25 vorgesehen ist. Der Seicher 28 erhöht entsprechend seinen gespeicherten Wert. Dieser Wert wird über den Schalter 52 in der gezeigten Stellung als Korrekturwert K ausgegeben und zum Bremsanforderungssignal BA addiert und das Signal S steigt entsprechend an. Die Fahrzeugverzögerung steigt an und zwar solange, als das gelieferte Verzögerungssignal b in den zulässigen Wertebereich des Fensterkomparators 24 einläuft, wobei dessen Ausgangssignal F den logischen Wert "1" annimmt. Der Wert im Speicher 28 bleibt unverändert, solange das Signal F einen logischen Wert "1" hat.

Im Fall 2 habe sich das Verzögerungssignal b gegenüber dem Fall 1 vergrößert und sei beispielsweise gleich dem 1,05-fachen des Bremsanforderungssignals BAR und liegt somit innerhalb des Toleranzbereiches. Das Signal F hat in diesem Fall den logischen Wert "1" und schaltet den Schalter 22 zum Kontakt 30 um und schaltet gleichzeitig die Speicherbereitschaft des Speicherelementes 28 ab. In diesem Fall wird zwar weiterhin ein Differenzsignal Δb und hieraus ein Signal 21 erzeugt, das allerdings nicht weiter verarbeitet wird. In diesem Fall wird der im Speicher 28 abgelegte Wert 29 des vorangegangenen Zeittaktes erneut dem Summierer 5 als Korrektursignal K zugeführt und hieraus das Ausgangssignal S gebildet.

Im dritten Fall - beispielsweise in einem nachfolgenden Zeittakt - sei das geglättete Verzögerungssignal b gleich dem 1,2-fachen des gefilterten Bremsanforderungssignal BAR und liegt somit erneut außerhalb des Toleranzbandes, so daß der Schalter 22 wieder in die gezeigte Stellung zurückgeschaltet wird und das Speicherelement 28 in speicherbereiten Zustand versetzt wird. Das Differenzsignal Δb ist in diesem Fall negativ und wird im Multiplizierer 20 mit dem Faktor K2 multipliziert. Nach Durchlaufen des Gradientenbegrenzungsschaltkreises 25 wird der neue Wert 29 in den Speicher 28 geschrieben und als Korrektursignal K dem Summierer 5 zugeführt.

In einem vierten Falle sei das geglättete Verzögerungssignal b gleich dem gefilterten Bremsanforderungssignal BAR, so daß das Differenzsignal Δb den Wert "0" hat und der Schalter 15 umschaltet, was dazu führt, daß überhaupt kein Korrektursignal K ausgegeben wird. Somit ist das Ausgangssignal S gleich dem gefilterten Bremsanforderungssignal BAR.

Ergänzend sei darauf hingewiesen, daß die erfindungsgemäße Steuerung mit Regeleingriff so in ein Gesamtbremssystem integriert sein kann, daß sie in bestimmten Betriebszuständen durch den Schalter 15 automatisch oder manuell abgeschaltet wird oder von einem anderen Teilsystem, wie z.B. einem Gleitschutzsystem abgeschaltet bzw. übersteuert werden kann. Eine Abschaltung und ein Eingreifen eines Gleitschutzsystems ist beispielsweise dann sinnvoll, wenn sämtliche Achsen eines Fahrzeugs oder eines Fahrzeugverbundes zum Blockieren neigen.

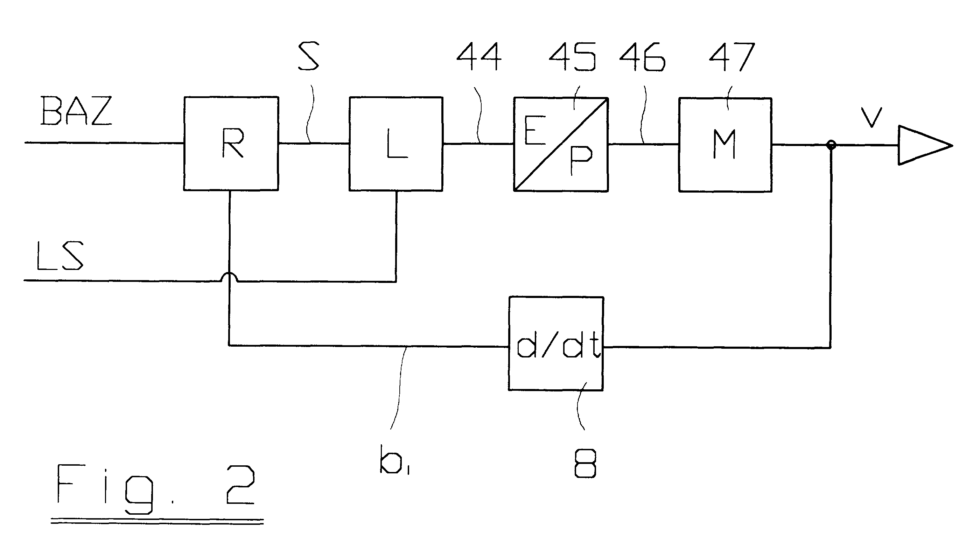

Fig. 2 zeigt ein schematisches Blockschaltbild, bei dem die in Fig. 1 gezeigte Verzögerungssteuerung mit Regeleingriff Bestandteil eines gesamten Bremssytems eines Fahrzeugs ist. Die in Fig. 1 gezeigte Verzögerungssteuerung mit Regeleingriff ist in Fig. 2 in einem mit R bezeichneten Block zusammengefaßt. Dem Block R wird das vom Fahrer vorgegebene Bremsanforderungssignal BAZ eingegeben, sowie das aus der Fahrzeuggeschwindigkeit v durch Differenzieren im Differenzierer 8 gewonnene Verzögerungssignal $b_i$. Aus den Signalen BAZ und $b_i$ erzeugt die Verzögerungssteuerung mit Regeleingriff das Steuersignal S, das einer Lasterfassungseinheit L zugeführt wird. Der Lasterfassungseinheit L werden zudem Lastsignale LS zugeführt, wobei in der schematischen Darstellung der Fig. 2 nur ein Signalweg LS gezeigt ist.

Wird eine Bremsanlage eines Zuges betrachtet, so entspricht die Anzahl der Lastsignale LS beispielsweise der Anzahl der Drehgestelle des Zuges, d.h. es wird die von jedem Drehgestell zu tragende Last verarbeitet. In Abhängigkeit von den möglicherweise unterschiedlichen Belastungen einzelner Drehgestelle, wird durch die Lasterfassungseinheit L eine entsprechende Anzahl von Ausgangssignalen 44 erzeugt, die einem Wandler 45 zugeführt werden.

Der beispielsweise elektropneumatische Wandler 45 wandelt die Signale 44 in Kräfte oder Drücke um, die Bremsmechaniken 47 (z.B. Bremszylinder oder Bremszangen) an den zugeordneten Dregestellen betätigen, was eine Abbremsung bewirkt und somit die Geschwindigkeit v verändert. Aus einer neuen sich im nächsten Zeittakt einstellenden Geschwindigkeit v wird eine neue Verzögerung b berechnet wird, die erneut der Verzögerungssteuerung mit Regeleingriff R zugeführt wird.

Die zusätzliche Erfassung von Lastsignalen LS ist vorteilhaft, um beispielsweise bei einem Zug die Situation zu verhindern, daß die aus dem Bremssteuersignal S erzeugten Bremskräfte nur den Bremsen eines Drehgestells zugeführt werden, während die anderen Drehgestelle ungebremst bleiben.

## Patentansprüche

1. Bremssteuerung für Fahrzeuge, insbesondere Schienenfahrzeuge, mit einem vom Fahrer betätigbaren Geber zur Erzeugung eines Bremsanforderungssignals (BAZ) und einer mit dem Geber verbundenen Steuerung, die in Abhängigkeit von dem Bremsanforderungssignal ein bremssteuerndes Ausgangssignal (S) erzeugt,

   **gekennzeichnet durch**

   - eine Meßeinrichtung (8, 10, 11), die ein der Fahrzeugverzögerung entsprechendes Verzögerungssignal (b) erzeugt;
   - einen Fensterkomparator (24), der überprüft, ob eine Differenz zwischen dem Bremsanforderungssignal (BAR) und dem Verzögerungssignal (b) innerhalb eines vordefinierten Bereiches liegt und der ein dem Ergebnis dieser Überprüfung entsprechendes Ausgangssignal (F) erzeugt;
   - eine Korrekturwerteinrichtung (6), die ein der Differenz zwischen dem Bremsanforderungssignal (BAR) und dem Verzögerungssignal (b) entsprechendes Korrektursignal (K) erzeugt, und

- eine Verknüpfungseinrichtung (5), die das Bremsanforderungssignal (BAR) entsprechend dem Korrektursignal (K) modifiziert, wobei eine Modifikation mit einem gegenüber der Vergangenheit veränderten Korrektursignal (K) nur dann erfolgt, wenn das Ausgangssignal (F) des Fensterkomparators (24) angibt, daß die Differenz zwischen dem Bremsanforderungssignal (BAR) und dem Verzögerungssignal (b) außerhalb des vordefinierten Bereiches liegt.

2. Bremssteuerung nach Anspruch 1,
   **dadurch gekennzeichnet,**
   daß die Meßeinrichtung (8, 10, 11) eine Filtereinrichtung (10, 11) aufweist, die mehrere aufeinanderfolgende zeitdiskrete Meßwerte ($b_i$) mehrerer aufeinanderfolgend gemessener Verzögerungssignale ($b_i$) zu dem Verzögerungssignal (b) verarbeitet.

3. Bremssteuerung nach Anspruch 2,
   **dadurch gekennzeichnet,**
   daß die Filtereinrichtung (10, 11), die während eines Zeittaktes zu verarbeitenden Meßwerte ($b_i$) unterschiedlich stark gewichtet.

4. Bremssteuerung nach Anspruch 3,
   **dadurch gekennzeichnet,**
   daß die Gewichtung mittels unterschiedlicher Gewichtungsfaktoren ($G_i$) erfolgt, wobei zeitlich später gemessene Meßwerte ($b_i$) stärker gewichtet werden als zeitlich früher gemessene Meßwerte ($b_i$).

5. Bremssteuerung nach einem der Ansprüche 1 bis 4,
   **dadurch gekennzeichnet,**
   daß die Korrekturwerteinrichtung (6) eine Gradientenbegrenzungseinrichtung (25) aufweist, die die zeitliche Änderung des Korrektursignals (K, 26, 29) auf einen vorgegebenen Betrag begrenzt.

6. Bremssteuerung nach Anspruch 5,
   **dadurch gekennzeichnet,**
   daß die Korrekturwerteinrichtung (6) eine Speichereinrichtung (28) aufweist, die ein von der Gradientenbegrenzungseinrichtung (25) geliefertes Signal (29) speichert, wenn das vom Fensterkomparator (24) gelieferte Ausgangssignal (F) einen vorgegebenen Wert hat.

7. Bremssteuerung nach einem der Ansprüche 1 bis 6,
   **dadurch gekennzeichnet,**
   daß die Korrekturwerteinrichtung (6) eine Regelverstärkungseinrichtung (19, 20, 22) aufweist, die ein aus dem Bremsanforderungssignal (BAR) und dem Verzögerungssignal (b) gebildetes Differenzsignal ($\Delta b$) in Abhängigkeit von dessen Vorzeichen unterschiedlich stark verstärkt und an die Gradientenbegrenzungseinrichtung (25) liefert, wenn das vom Fensterkomparator (24) erzeugte Ausgangssignal (F) einen vorgegebenen Wert hat.

8. Bremssteuerung nach einem der Ansprüche 1 bis 7,
   **dadurch gekennzeichnet,**
   daß die Korrekturwerteinrichtung (6) eine Begrenzungseinrichtung (50, 52) aufweist, die ein zur Verminderung des Bremsanforderungssignals (BAR) erzeugtes Korrektursignal (K) auf einen vorgegebenen Betrag (-x) begrenzt.

9. Bremssteuerung nach einem der Ansprüche 1 bis 8,
   **dadurch gekennzeichnet,**
   daß eine Schalteinrichtung (15) vorgesehen ist, welche die Korrekturwerteinrichtung (6) in Abhängigkeit von vorgegebenen Bedingungen, wie einer Fahrzeuggeschwindigkeit, einem Wert eines Gleitschutzsignals, einem Wert eines Bremssignals, den Typen aneinandergekoppelter Fahrzeuge oder ähnlichem, ein- bzw. ausschaltet.

10. Bremssteuerung nach einem der Ansprüche 1 bis 9,
    **dadurch gekennzeichnet,**
    daß eine Ruckbegrenzungseinrichtung (3) vorgesehen ist, die aus einem von dem Geber (G) gelieferten Signal (BAZ) das Bremsanforderungssignal (BAR) erzeugt und die die zeitliche Änderung des Bremsanforderungssignals (BAR) auf einen vorgegebenen Betrag begrenzt.

11. Verfahren zur Steuerung von Fahrzeugbremsen, insbesondere von Schienenfahrzeugbremsen, bei dem aus einem von einem Fahrer vorzugebenden Bremsanforderungssignal ein bremssteuerndes Bremsausgangssignal erzeugt wird,

**gekennzeichnet durch folgende Schritte:**

- Messen der Fahrzeugverzögerung ($b_i$) und Erzeugung eines entsprechenden Verzögerungssignals (b);
- Ermitteln einer Differenz zwischen dem Bremsanforderungssignal (BAR) und dem Verzögerungssignal (b);
- Erzeugen eines der Differenz zwischen dem Bremsanforderungssignal (BAR) und dem Verzögerungssignal (b) entsprechenden Korrektursignals (K), Überprüfen, ob die Differenz innerhalb oder außerhalb eines vorgegebenen Bereiches liegt, und
- Modifizieren des Bremsanforderungssignals (BAR), entsprechend dem Korrektursignal (K) nur dann, wenn die Differenz zwischen dem Bremsanforderungssignal (BAR) und dem Verzögerungssignal (b) außerhalb des vordefinierten Bereiches liegt.

12. Verfahren nach Anspruch 11,
**gekennzeichnet durch**
eine Verarbeitung mehrerer zeitdiskreter Meßwerte ($b_i$) mehrerer aufeinanderfolgend gemessener Verzögerungssignale zu dem Verzögerungssignal (b).

13. Verfahren nach Anspruch 12,
**gekennzeichnet durch**
eine unterschiedlich starke Gewichtung der während eines Zeittaktes zu verarbeitenden Meßwerte (bi).

14. Verfahren nach Anspruch 13,
**gekennzeichnet durch**
eine Gewichtung mit Gewichtungsfaktoren ($G_i$), bei der zeitlich später gemessene Meßwerte ($b_i$) stärker gewichtet werden als zeitlich früher gemessene Meßwerte ($b_i$).

15. Verfahren nach einem der Ansprüche 11 bis 14,
**gekennzeichnet durch**
eine Begrenzung der zeitlichen Änderung des Korrektursignals (K) auf einen vorgegebenen Betrag.

16. Verfahren nach Anspruch 15,
**gekennzeichnet durch**
eine Speicherung des gegebenenfalls begrenzten Korrektursignals (K) unter der Bedingung, daß die Differenz zwischen dem Bremsanforderungssignal (BAR) und dem Verzögerungssignal (b) innerhalb des vorgegebenen Bereiches liegt.

17. Verfahren nach einem der Ansprüche 11 bis 16,
**dadurch gekennzeichnet,**
daß eine Verstärkung eines aus dem Bremsanforderungssignal (BAR) und dem Verzögerungssignal (b) gebildeten Differenzsignals ($\Delta b$) durchgeführt wird, wobei das Differenzsignal ($\Delta b$) in Abhängigkeit von seinem Vorzeichen unterschiedlich verstärkt wird.

18. Verfahren nach einem der Ansprüche 11 bis 17,
**gekennzeichnet durch**
eine Begrenzung eines zur Verminderung des Bremsanforderungssignals (BAR) erzeugten Korrektursignals (K), auf einen vorgegebenen Betrag (-x).

19. Verfahren nach einem der Ansprüche 11 bis 18,
**dadurch gekennzeichnet,**
daß die Erzeugung eines Korrektursignals (K) in Ab- hängigkeit von vorgegebenen Bedingungen wie einer Fahrzeuggeschwindigkeit, einem Wert eines Gleitschutzsignals, einem Wert eines Bremssignals, den Typen aneinandergekoppelter Fahrzeuge oder ähnlichem durchgeführt wird oder nicht durchgeführt wird.

Fig. 1

EP 0 934 861 A2

Fig. 2